(19) Europäisches Patentamt / European Patent Office / Office européen des brevets

(11) **EP 2 147 803 B1**

(12) **EUROPEAN PATENT SPECIFICATION**

(45) Date of publication and mention
of the grant of the patent:
**08.07.2015 Bulletin 2015/28**

(21) Application number: **08752902.0**

(22) Date of filing: **16.05.2008**

(51) Int Cl.:
**B60C 5/14** *(2006.01)*     **B60C 1/00** *(2006.01)*

(86) International application number:
**PCT/JP2008/059073**

(87) International publication number:
**WO 2008/143188 (27.11.2008 Gazette 2008/48)**

(54) **RADIAL TIRE FOR HEAVY LOAD**

RADIALREIFEN FÜR SCHWERTRANSPORT

PNEU À CARCASSE RADIALE POUR CHARGE LOURDE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **17.05.2007 JP 2007131486**

(43) Date of publication of application:
**27.01.2010 Bulletin 2010/04**

(73) Proprietor: **Bridgestone Corporation
Tokyo 104-8340 (JP)**

(72) Inventor: **ISHIDA, Kouji**
**Kodaira-shi**
**Tokyo 187-8531 (JP)**

(74) Representative: **Oxley, Robin John George et al
Marks & Clerk LLP
90 Long Acre
London WC2E 9RA (GB)**

(56) References cited:
**EP-A1- 0 732 224     WO-A1-2008/013183
JP-A- 2004 176 048     JP-A- 2006 117 099
JP-A- 2007 100 003     JP-A- 2007 112 000**

**Description**

BACKGROUND OF THE INVENTION

The present invention relates to a radial tire for a heavy load used for trucks and buses. More specifically, it relates to a radial tire for a heavy load in which a tire durability is consistent with a reduction in a weight.

RELATED ART

In considering a durability of a tire against troubles of a belt, it is important to inhibit a rubber covering a cord of a belt crossing layer from being oxidatively deteriorated by penetration of oxygen contained in the air filled into the tire. Then, according to investigations which have so far been made, a rubber covering a cord of a belt crossing layer has so far been inhibited from being deteriorated by increasing a gauge of inner liners or reducing an oxygen permeability of the inner liners, and it has been found that while the durability is enhanced, a balance thereof with a reduction in a weight of the tire is limited.

On the other hand, a reduction in the thicknesses of gauges of various member, a simplification in a belt structure (a decrease in the number of belt layers) and combinations thereof are possible as a weight reduction structure of tires. In recent years, a belt structure of three layers which is reduced in belts by one layer by optimization of a belt angle is proposed against a conventional belt structure of four layers in which a belt crossing layer is provided in the second or third layer, and it is investigated as a structure in which running growth is inhibited in addition to achievement of a reduction in a weight. However, it has been confirmed that the belt structure of three layers stays in a state in which the belt crossing layer is arranged in an inside face of the tire as compared with the belt structure of four layers, so that penetration of oxygen contained in the air filled reaches the belt crossing layer and accelerates deterioration of covered rubber to reduce a durability of the tire due to troubles of the belt. Then, a gauge of inner liners can be increased in a thickness, but it stays in a trend opposite to a reduction in a weight. In order to apply a simplified lightweight belt structure to allow a durability to be consistent with a reduction in a weight, it is the most important matter to control an oxygen permeation amount which exerts an influence on a deterioration degree of covered rubber of a belt cord.

Many inner liners which are excellent in an oxygen permeation resistance are developed as a method for controlling the above oxygen permeation amount. They include, for example, optimization of systems blended with butyl rubber, particularly butyl halogenated rubber, use of resin films having a low air permeability, metal-deposited films and the like. Raw materials of low molecular components having an inferior oxygen permeability and calcium carbonate and flat clay as a filler which have an air shutoff property can be used as a method for optimizing the blended systems. Further, resins comprising ethylene-vinyl alcohol as a skeleton (refer to, for example, a patent document 1), thermoplastic resin/elastomer blends comprising butyl rubber which is a chlorinated or brominated modified copolymer of a copolymer of a nylon resin with monoolefin and paramethylstyrene can be used for resin films (refer to, for example, a patent document 2 or 3).

Further, metal-deposited films having a very high air shutoff property (refer to, for example, a patent document 4) can be used as well. When making use of films and metal-deposited films, a mass of an inner liner comprising a rubber component can be reduced to a large extent, and therefore they are very advantageous for a reduction in a weight.

Also, in addition to an oxygen permeation resistance of an inner liner, a distance from an interface of rubber adjacent to an inner liner layer which shuts off oxygen to an interface of a belt crossing layer is an important factor. A method for controlling a distance up to a belt crossing layer includes a change in tie rubber (inner liner B layer) present between an inner liner and a ply layer and rubber (ply insert) between a ply and a belt and an increase and a decrease in the number of belt layers, and a reduction in the thicknesses of gauges of respective members and cut-down thereof lead to a reduction in a weight of the tire. However, if a distance up to a belt crossing layer is carelessly allowed to be close to an inner face of a tire, a deterioration in the durability originating in troubles of the belt is brought about as described above.

However, requirements to development of technologies which allow a reduction in a weight of a tire to be consistent with a durability thereof in order to save resources and energy grow larger and larger, and further development thereof is desired.

Patent document 1: Japanese Patent Application Laid-Open No. 176048/2004
Patent document 2: Japanese Patent Application Laid-Open No. 199713/1999
Patent document 3: WO 2004/081099
Patent document 4: WO 98/33688
Patent document 5: EP0732224 A1

## DISCLOSURE OF THE INVENTION

In light of the situation described above, an object of the present invention is to provide a radial tire for a heavy load in which a tire durability is consistent with a reduction in a weight thereof.

Intensive researches repeated by the present inventors in order to achieve the object described above have resulted in finding that the object can be achieved by controlling an inner liner performance = P ((an oxygen permeation amount ($cm^3$•cm/$cm^2$•sec•cm Hg) of an inner liner A layer at 20°C and 65 % RH) $\times 10^{10}$/G (product gauge (mm)) of an inner liner (A layer) determining an oxygen amount permeating into a belt crossing layer to a specific value or lower and controlling D (distance (mm) from an interface of the inner liner A layer at an outside in a tire diameter direction to an interface of covered rubber in a crossing layer) to a specific value or lower. The present invention has been completed based the above knowledge. This makes it possible to improve as well a low fuel consumption.

That is, the present invention provides the following items:

[1] a radial tire for a heavy load comprising a bead core, a carcass ply layer, an inner liner A layer, a belt and a tread, wherein the following relational equation (I):

$$P/G \leqq 1.00 \qquad (I)$$

(wherein P/G represents an oxygen permeation resistant performance of the inner liner A layer; P represents a value shown by (an oxygen permeation amount ($cm^3$•cm/$cm^2$•sec•cm Hg) of the inner liner A layer at 20°C and 65 % RH) $\times 10^{10}$; and G represents a product gauge (mm) of the inner liner A layer) and a relational equation (II):

$$D \leqq 6.0 \qquad (II)$$

(wherein D represents a distance (mm) from an interface of the inner liner A layer at an outside in a tire diameter direction to an interface of covered rubber in a belt crossing layer) are satisfied at the same time,

[2] the radial tire for a heavy load according to the above item [1], wherein an inner liner B layer is provided in an inside of the carcass ply layer, and the inner liner A layer is provided in an innermost layer thereof,

[3] the radial tire for a heavy load according to the above item [1] or [2], wherein a thickness of the inner liner A layer is 4 mm to $1 \times 10^{-5}$ mm,

[4] the radial tire for a heavy load according to the item above [1], wherein the following relational equation (III):

$$P/G \leqq 0.50 \qquad (III)$$

and relational equation (IV):

$$D \leqq 5.2 \qquad (IV)$$

are satisfied at the same time,

[5] the radial tire for a heavy load according to any of the above items [1] to [4], wherein a P value of the inner liner A layer at 20°C and 65 % RH is 0.03 or less,

[6] the radial tire for a heavy load according to any of the above items [1] to [5], wherein the inner liner A layer comprises a layer comprising a modified ethylene-vinyl alcohol copolymer obtained by reacting 100 parts by mass of an ethylene-vinyl alcohol copolymer having an ethylene content of 25 to 50 mole % with 1 to 50 parts by mass of an epoxy compound,

[7] the radial tire for a heavy load according to any of the above items [1] to [6], wherein the inner liner A layer is a single thermoplastic resin film layer comprising a resin composition layer in which a soft resin is dispersed in a matrix resin or a multilayered thermoplastic resin film layer comprising the above resin composition layer,

[8] the radial tire for a heavy load according to the above item [7], wherein a Young's modulus of the soft resin is 500 MPa or less at 23°C,

[9] the radial tire for a heavy load according to the above item [7] or [8], wherein the soft resin has a functional group reacting with a hydroxyl group,

[10] the radial tire for a heavy load according to any of the above items [1] to [9], wherein a Young's modulus of the resin composition is 1500 MPa or less at -20°C,

[11] the radial tire for a heavy load according to any of the above items [1] to [10], wherein a content of the soft resin in the resin composition is 10 to 30 % by mass, and the soft resin dispersed in the matrix resin has an average particle diameter of 2 $\mu$m or less,

[12] the radial tire for a heavy load according to any of the above items [1] to [11], wherein the layer comprising the above resin composition is cross-linked,

[13] the radial tire for a heavy load according to any of the above items [7] to [12], wherein the matrix resin constituting the inner liner A layer comprises the above modified ethylene-vinyl alcohol copolymer and

[14] the radial tire for a heavy load according to any of the above items [1] to [13], wherein a thermoplastic urethane base elastomer is used as a surface layer of the layer comprising the modified ethylene-vinyl alcohol copolymer or the layer comprising the above resin composition.

BRIEF DESCRIPTION OF THE DRAWINGS

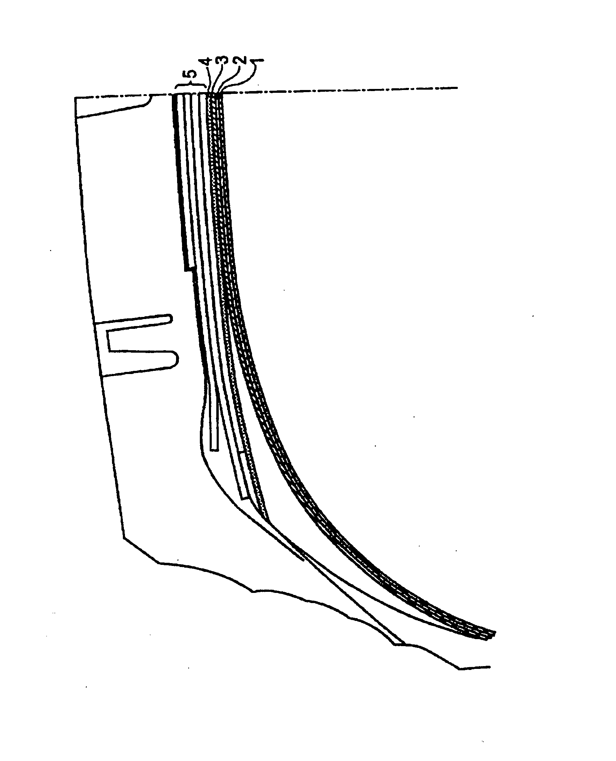

Fig. 1 is a partial cross-sectional drawing showing one example of the embodiment of the radial tire for a heavy load according to the present invention.

EXPLANATION OF THE CODES

1: Inner liner A layer (air shutoff layer provided as an innermost layer in tire)
2: Inner liner B layer
3: Carcass ply
4: Ply insert
5: Belt layer

BEST MODE FOR CARRYING OUT THE INVENTION

In the radial tire for a heavy load according to the present invention, the following relational equation (I):

$$P/G \leqq 1.00 \qquad (I)$$

(wherein P/G represents an oxygen permeation resistant performance of the inner liner A layer; P represents a value shown by (an oxygen permeation amount ($cm^3 \cdot cm/cm^2 \cdot sec \cdot cm$ Hg) of the inner liner A layer at 20°C and 65 % RH) $\times$ $10^{10}$; and G represents a product gauge (mm) of the inner liner A layer) and the relational equation (II):

$$D \leqq 6.0 \qquad (II)$$

(wherein D represents a distance (mm) from an interface of the inner liner A layer at an outside in a tire diameter direction to an interface of covered rubber in the crossing layer) have to be satisfied at the same time.

The present invention shall be explained below in details based on Fig. 1. Fig. 1 is a partial cross-sectional drawing of a radial tire for a heavy load showing one embodiment of the present invention.

A number 1 is the inner liner A layer (tire innermost surface air shutoff layer); a number 2 is the inner liner B layer which is provided if necessary; a number 3 is the carcass ply comprising a radial cord layer; a number 4 is the ply insert (rubber between the ply and the belt) which is provided if necessary; a number 5 is the belt layer, and Fig.1 shows an example of a four layer belt structure. A 1 belt (1B), a 2 belt (2B), a 3 belt (3B) and a 4 belt (4B) are shown in order from a carcass ply side. In the case of the four layer belt structure, the crossing layer is constituted by the 2 belt and the 3 belt, and cords are extended parallel to each other in the layer covered with rubber. The cords are laminated so that they are crossed with each other between the adjacent layers (the 2 belt and the 3 belt) and extended in an opposite direction with a tire equator set in the center, and they exert a truss hoop effect to suppress pushing out (diameter growth) of the tire caused by an inner pressure and rotation and play a role to accept a power input from a road surface and reduce it.

P/G shown in the relational equation (I) described above shows an oxygen permeation resistant performance of the inner liner A layer (hereinafter referred to as the inner liner performance); P shows a value shown by (an oxygen permeatio amount ($cm^3 \cdot cm/cm^2 \cdot sec \cdot cm$ Hg) of the inner liner A layer at 20°C and 65 % RH) $\times$ $10^{10}$; and G shows a product gauge (mm) of the inner liner A layer.

The inner liner performance (P/G) of the inner liner A layer has to be 1 or less. If it exceeds 1, an effect exerted on oxidative degradation of rubber covering the crossing layer is likely to grow larger. The inner liner performance (P/G) is preferably 0.5 or less, particularly preferably 0.3 or less.

A method for improving an oxygen permeability includes a change in a rubber quality and application of a film inner liner, and it further includes a reduction in an amount of oil which is a low molecular weight component and application of calcium carbonate and flat clay which have a high masking effect as compared with carbon black. In particular, application of a resin film inner liner and an inner liner containing a metal-deposited film is preferred from the viewpoints of an oxygen permeation resistant performance and a reduction in a weight of the tire. Among them, a resin film inner liner comprising a modified ethylene-vinyl alcohol copolymer is preferred.

Further, the distance D from an interface of the inner liner A layer at an outside in a tire diameter direction to an interface of covered rubber in the crossing layer shown in the relational equation (II) has to be 6 mm or less. If it exceeds 6 mm, it is difficult to reduce a weight of the tire.

A thickness of the inner liner A layer described above is preferably 4 mm to $1 \times 10^{-5}$ mm. It falls in a range of more preferably 2 mm to $1 \times 10^{-5}$ mm, particularly preferably 0.5 mm to $1 \times 10^{-5}$ mm. If a thickness of the inner liner A layer is larger than 4 mm, the tire is increased in a weight, and the rolling resistance is deteriorated. If it is smaller than $1 \times 10^{-5}$ mm, the gas barrier property can not be secured.

A radial tire for a heavy load in which a tire durability is consistent with a reduction in a weight can be obtained by controlling a thickness of the inner liner A layer to the range described above, setting the inner liner performance (P/G) to 1 or less and satisfying D of 6 mm or less.

The distance D from an interface of the inner liner A layer at an outside in a tire diameter direction to an interface of covered rubber in the crossing layer shall specifically be explained with reference to Fig. 1. The tire shown in Fig. 1 has a belt structure of four layers, and therefore the above value of D is the total of the respective product gauges of the inner liner B layer shown by 2, the carcass ply shown by 3, the ply insert shown by 4 and the 1 belt (1B) shown by 5.

The case of a belt structure of three layers is not shown, but since the crossing layer is constituted by the 1 belt (1B) and the 2 belt (2B), the above value of D is the total of the respective product gauges of the inner liner B layer shown by 2, the carcass ply shown by 3 and the ply insert shown by 4 provided if necessary. In the case of the belt structure of three layers, the belt layer is less by one layer as compared with the belt structure of four layers, and therefore it is advantageous as far as a reduction in a weight is concerned, but the above value of D is shorter by a thickness of one belt layer. Accordingly, an inner liner having "an oxygen permeation resistant performance" corresponding thereto is preferably used to keep a balance.

Further, when the belt including the crossing layer assumes a three layer structure, P/G of the relational equation (III) is preferably 0.5 or less, and D of the relational equation (IV) is preferably 5.2 or less. A radial tire for a heavy load which is reduced more in a weight and excellent in a tire durability can be obtained by satisfying the above relational equations.

A P value at 20°C and 65 % RH in the inner liner A layer used in the present invention is preferably 2.0 or less, more preferably 0.2 or less and particularly preferably 0.03 or less.

Inner liner A layer:

<Modified ethylene-vinyl alcohol copolymer>

The inner liner A layer described above comprises preferably a layer comprising a modified ethylene-vinyl alcohol copolymer obtained by reacting 100 parts by mass of an ethylene-vinyl alcohol copolymer having an ethylene content of 25 to 50 mole % with 1 to 50 parts by mass of an epoxy compound.

The ethylene-vinyl alcohol copolymer has a very low air permeation amount and is excellent in an air permeation resistance, and therefore it is a preferred material. A modified ethylene-vinyl alcohol copolymer obtained by reacting an ethylene-vinyl alcohol copolymer with an epoxy compound is preferred. Such modification makes it possible to reduce an elastic modulus of the unmodified ethylene-vinyl alcohol copolymer to a large extent, and a breaking property of the copolymer and a degree of cracks generated in bending can be improved.

In the ethylene-vinyl alcohol copolymer used for the above modification treatment, an ethylene unit content is preferably 25 to 50 mole %. From the viewpoint of obtaining the good bending resistance and the good fatigue resistance, the ethylene unit content is more preferably 30 mole % or more, further preferably 35 mole % or more. Also, from the viewpoint of the oxygen permeation resistance, the ethylene unit content is more preferably 48 mole % or less, further preferably 45 mole % or less. When the ethylene unit content is less than 25 mole %, the bending resistance and the fatigue resistance are likely to be deteriorated, and in addition thereto, the melt moldability is likely to be deteriorated. Further, if it exceeds 50 mole %, the oxygen permeation resistance is short in a certain case.

Further, a saponification degree of the ethylene-vinyl alcohol copolymer described above is preferably 90 mole % or more, more preferably 95 mole % or more, further preferably 98 mole % or more and most preferably 99 mole % or more. If the saponification degree is less than 90 mole %, the oxygen permeation resistance and the heat stability in preparing the laminated matter are likely to be poor.

The modification treatment can be carried out by reacting 100 parts by mass of the unmodified ethylene-vinyl alcohol copolymer described above with preferably 1 to 50 parts by mass, more preferably 2 to 40 parts by mass and further preferably 5 to 35 parts by mass of the epoxy compound. In the above case, they are advantageously reacted in a solution using a suitable solvent.

In a modification treating method carried out by solution reaction, a modified ethylene-vinyl alcohol copolymer is obtained by reacting a solution of an ethylene-vinyl alcohol copolymer with an epoxy compound under the presence of an acid catalyst or an alkali catalyst. Polar aprotic solvents which are good solvents for the ethylene-vinyl alcohol copolymer such as dimethylsulfoxide, dimethylformamide, dimethylacetamide, N-methylpyrrolidone and the like are preferred as the reaction solvent. The reaction catalyst includes acid catalysts such as p-toluenesulfonic acid, methanesulfonic acid, trifluoromethanesulfonic acid, sulfuric acid, boron trifluoride and the like and alkali catalysts such as sodium hydroxide, potassium hydroxide, lithium hydroxide, sodium methoxide and the like. Among them, the acid catalysts are preferably used. The catalyst amount is suitably 0.0001 to 10 parts by mass based on 100 parts by mass of the ethylene-vinyl alcohol copolymer. Further, the modified ethylene-vinyl alcohol copolymer can be produced as well by dissolving the ethylene-vinyl alcohol copolymer and the epoxy compound in the reaction solvent and subjecting them to heat treatment.

The epoxy compound used for the modification treatment shall not specifically be restricted and is preferably a monovalent epoxy compound. If it is a divalent or higher epoxy compound, a cross-linking reaction with the ethylene-vinyl alcohol copolymer is brought about to produce gels, projections and the like, whereby the laminated matter is likely to be reduced in a quality. From the viewpoints of an easiness of production, an oxygen permeation resistance, a bending resistance and a fatigue resistance of the modified ethylene-vinyl alcohol copolymer, the preferred monovalent epoxy compound includes glycidol and epoxypropane.

<Soft resin>

The thermoplastic film constituting the inner liner A layer in the radial tire for a heavy load according to the present invention is preferably a resin composition layer in which a soft resin is dispersed in a matrix resin. The soft resin is preferably a resin which has a functional group reacting with a hydroxyl group and in which a Young's modulus is 500 MPa or less at 23°C.

The matrix resin for dispersing the soft resin is preferably the modified ethylene-vinyl alcohol copolymer described above which is obtained by reacting 100 parts by mass of the ethylene-vinyl alcohol copolymer having an ethylene content of 25 to 50 mole % with 1 to 50 parts by mass of the epoxy compound. The modified ethylene-vinyl alcohol copolymer described above has a lower elastic modulus as compared with those of conventional ethylene-vinyl alcohol copolymers, and the soft resin having a functional group reacting with a hydroxyl group and satisfying the physical properties described above is dispersed therein, whereby the elastic modulus can further be reduced. Accordingly, the resin composition prepared by dispersing the soft resin in the matrix resin comprising the modified ethylene-vinyl alcohol copolymer described above is preferably a resin composition prepared by dispersing a soft resin in a matrix resin, which is reduced in an elastic modulus to a large extent and enhanced in a breaking resistance in bending and which is less liable to generate cracks.

The thermoplastic film constituting the inner liner A layer in the radial tire for a heavy load according to the present invention is preferably the resin composition layer in which the soft resin is dispersed in the matrix resin.

The thermoplastic resin constituting the above matrix shall not specifically be restricted as long as it is excellent in a gas barrier property and has a suitable mechanical strength, and various resin films can be used. A material for the above resin film includes, for example, polyamide base resins, polyvinylidene chloride base resins, polyester base resins, ethylene-vinyl alcohol copolymer base resins, thermoplastic urethane base elastomers and the like. They may be used alone or in combination of two or more kinds there. A resin film prepared by using the above materials may be either a single layer film or a multilayer film of two or more layers.

Among the materials described above, the ethylene-vinyl alcohol copolymer resins have a very low air permeation amount and are excellent in a gas barrier property, and therefore they are preferred materials. In particular, the modified ethylene-vinyl alcohol copolymer resin described above is preferred.

The soft resin is preferably a resin which has a functional group reacting with a hydroxyl group and in which a Young's modulus is 500 MPa or less at 23°C.

The matrix resin for dispersing the soft resin is preferably the modified ethylene-vinyl alcohol copolymer described above which is obtained by reacting 100 parts by mass of the ethylene-vinyl alcohol copolymer having an ethylene content of 25 to 50 mole % with 1 to 50 parts by mass of the epoxy compound. The modified ethylene-vinyl alcohol copolymer described above has a lower elastic modulus as compared with those of conventional ethylene-vinyl alcohol copolymers, and the soft resin having a functional group reacting with a hydroxyl group and satisfying the physical properties described above is dispersed therein, whereby the elastic modulus can further be reduced. Accordingly, the resin composition prepared by dispersing the soft resin in the matrix resin comprising the modified ethylene-vinyl alcohol copolymer described above is reduced in an elastic modulus to a large extent, enhanced in a breaking resistance in bending and less liable to generate cracks.

The soft resin dispersed in the matrix resin comprising the modified ethylene-vinyl alcohol copolymer described above has a functional group reacting with a hydroxyl group and a Young's modulus of 500 MPa or less at 23°C, and having a functional group reacting with a hydroxyl group allows the soft resin to be dispersed evenly in the modified ethylene-vinyl alcohol copolymer. In this connection, the functional group reacting with a hydroxyl group includes a maleic anhydride residue, a hydroxyl group, a carboxyl group, an amino group and the like.

The soft resin having a functional group reacting with a hydroxyl group includes, to be specific, maleic anhydride-modified hydrogenated styrene-ethylene-butadiene-styrene block copolymers, maleic anhydride-modified ultralow density polyethylene and the like. If a Young's modulus of the soft resin is 500 MPa or less at 23°C, the resin composition can be reduced in an elastic modulus and as a result thereof, can be improved in a bending resistance.

A Young's modulus of the resin composition described above is preferably 1500 MPa or less at -20°C. If the Young's modulus is 1500 MPa or less at -20°C, the tire can be improved in a durability when used in a cold district.

A content of the soft resin in the resin composition described above falls preferably in a range of 10 to 30 % by mass. Allowing a content of the soft resin to fall in the range described above makes it possible to inhibit a gas barrier property of the resin composition from being reduced and enhance a bending resistance thereof.

Further, an average particle diameter of the soft resin in a state in which it is dispersed in the modified ethylene-vinyl alcohol copolymer is preferably 2 $\mu$m or less. The average particle diameter exceeding 2 $\mu$m is likely to make it impossible to sufficiently improve a bending resistance of the layer comprising the resin composition described above, and a reduction in a gas barrier property of the resin composition and in its turn, a deterioration in an inner pressure holding property of the tire are brought about in a certain case. An average particle diameter of the soft resin in the modified ethylene-vinyl alcohol copolymer can be obtained by freezing the sample, cutting it into a section by means of a microtome and observing the section under a transmission electron microscope (TEM).

The resin composition described above can be prepared by mixing the modified ethylene-vinyl alcohol copolymer with the soft resin. The resin composition is preferably film-shaped in producing the inner liner, and the layer comprising the resin composition is molded into a film, a sheet or the like at a melting temperature of preferably 150 to 270°C by melt molding, preferably extrusion molding such as a T die method, an inflation method and the like and is used in the form of an inner liner.

The layer comprising the resin composition described above is preferably cross-linked. If the layer comprising the resin composition described above is not cross-linked, the inner liner is notably deformed and becomes uneven in processing step of the tire, and a gas barrier property, a bending resistance and a fatigue resistance of the inner liner are deteriorated in a certain case.

In this regard, the cross-linking method is preferably a method for irradiating with an energy ray, and the energy ray includes a UV ray, an electron beam and an ionizing radiation such as an X ray, an $\alpha$ ray, a $\gamma$ ray and the like. Among them, an electron beam is particularly preferred. Irradiation with an electron beam is carried out preferably after the resin composition is processed into a molded matter such as a film, a sheet and the like. In this connection, a dose of an electron beam falls in a range of preferably 10 to 60 Mrad, more preferably 20 to 50 Mrad. If a dose of the electron beam is less than 10 Mrad, cross-linking is less liable to proceed. On the other hand, if it exceeds 60 Mrad, degradation of the molded matter is liable to go on.

<Thermoplastic urethane base elastomer>

A surface layer of the film comprising the resin composition constituting the inner liner A layer in the radial tire for a heavy load according to the present invention is preferably a layer containing a thermoplastic urethane base elastomer layer, particularly preferably a layer containing the thermoplastic urethane base elastomer layer and comprising a multilayer film containing at least one layer of the modified ethylene-vinyl alcohol copolymer described above. The thermoplastic urethane base elastomer is excellent in a water resistance and an adhesive property to rubber, and it is arranged preferably at an outer layer part particularly in the multilayer film and used.

A multilayer film of a three layer structure in which thermoplastic urethane base elastomer films are laminated respectively on both surfaces of the resin composition film obtained by dispersing the soft resin in the modified ethylene-vinyl alcohol copolymer or the matrix resin each described above can be given as the specific example of the above multilayer film.

The above thermoplastic urethane base elastomer (hereinafter abbreviated as TPU) of the thermoplastic resin film constituting the inner liner A layer in the radial tire for a heavy load according to the present invention is an elastomer having a urethane group (-NH-COO-) in a molecule and produced by an intermolecular reaction between three components of (1) polyol (long chain diol), (2) diisocyanate and (3) short chain diol. The polyol and the short chain diol are subjected to addition reaction with the diisocyanate to produce linear polyurethane. Among the above components, the polyol is turned into a soft part (soft segment) of the elastomer, and the diisocyanate and the short chain diol are turned into a hard part (hard segment). The properties of TPU are influenced by the properties of the raw materials, the polymerization conditions and the blend ratio, and among them, the type of the polyol exerts a large influence on the properties of TPU. A large part of the basic characteristics is decided by the kind of the long chain diol, and the hardness is controlled by a proportion of the hard segment.

The kind thereof includes (a) a caprolactone type (polylactone ester polyol obtained by subjecting caprolactone to ring opening), (b) an adipic acid type (= adipate type) (adipic acid ester polyol of adipic acid and glycol) and (c) a PTMG (polytetramethylene glycol) type (polytetramethylene glycol obtained by subjecting tetrahydrofuran to ring opening polymerization).

In the present invention, a molding method for the resin film constituting the inner liner A layer shall not specifically be restricted, and in the case of the single layer film, methods which have so far been publicly known, for example, a solution flow casting method, a melt extrusion method, a calendar method and the like can be employed. Among the above methods, the melt extrusion method such as a T die method, an inflation method and the like are suited. Further, in the case of the multilayer film, a laminate method carried out by coextrusion is preferably used.

A thickness of the resin film layer constituting the inner liner A layer in the present invention is preferably 200 $\mu$m or less from the viewpoint of reducing the thickness when using the laminated matter of the thermoplastic resin film as the inner liner. If the thickness is too small, an effect of bonding the inner liner A layer on the inner liner B layer via an adhesive layer Chemlok 6250 (manufactured by LORD Corporation) is unlikely to be sufficiently exerted. Accordingly, a lower limit of a thickness of the inner liner A layer is about 1 $\mu$m, more preferably 10 to 150 $\mu$m, and the further preferred thickness falls in a range of 20 to 100 $\mu$m.

Inner liner B layer:

In the radial tire for a heavy load according to the present invention, the inner liner B layer can be provided, if necessary, between the carcass ply layer and the inner liner A layer in order to secure adhesion between a ply coating rubber and a steel cord. Butyl rubber, diene base rubber and the like are shown as the suited examples of a rubbery elastic matter constituting the inner liner B layer.

From the viewpoint of inhibiting cracks produced in the inner liner B layer from progressing, a composition containing butyl rubber and diene base rubber is preferably used as the rubbery elastic matter. A preferred content of the butyl rubber in the rubber component in the above inner liner B layer is 70 to 100 % by mass from the viewpoint of an oxygen permeation resistance, and the diene base rubber can be contained in the above rubber component in a proportion of 0 to 50 % by mass, preferably 0 to 30 % by mass. Use of the above composition as the inner liner B layer makes it possible to inhibit well oxygen permeation even when fine cracks are produced in the inner liner B layer.

Further, in the inner liner for the heavy load radial tire of the present invention, an adhesive layer can be used as well between the layer (the inner liner A layer) comprising the resin composition described above and the inner liner B layer. An adhesive used for the adhesive layer described above includes adhesives of a chlorinated rubber · isocyanate base.

The inner liner B layer is adjacent to the ply coating rubber and the inner liner A layer. Usually, the ply coating rubber is blended with an adhesive promoter such as cobalt naphthenate, cobalt stearate and the like and a large amount of sulfur as compared with usual rubber compositions in order to secure adhesion with a steel cord subjected to brass plating.

When the inner liner A layer which is the resin composition layer obtained by dispersing the soft resin in the matrix resin and which is not blended with cobalt and sulfur is adjacent to the ply coating rubber by omitting the inner liner B layer, adhesion between the ply coating rubber and the steel cord is partially reduced by allowing the steel cord to be close to the inner liner A layer due to a bash bread phenomenon. In order to avoid the above problem, the inner liner B layer is preferably provided.

A thickness of the rubbery elastic matter layer in the inner liner B layer according to the present invention falls usually in a range of preferably 50 to 2000 $\mu$m, more preferably 100 to 1000 $\mu$m and particularly preferably 300 to 800 $\mu$m. If the total of a thickness of the inner liner B layer is less than 50 $\mu$m, the effects thereof are not sufficiently displayed to make it difficult to control troubles when rupture and cracking are brought about in the layer comprising the resin composition, and an inner pressure holding property of the tire can not sufficiently be maintained in a certain case. On the other hand, if it exceeds 2000 $\mu$m, an effect of reducing a weight of the tire is decreased.

In addition to the rubber component described above, an inorganic filler can be added to the above inner liner B layer in order to enhance an oxygen permeation resistance, a low temperature cracking resistance and a bending fatigue resistance. The inorganic filler is preferably a stratified or tabular filler, and the above filler includes, for example, kaolin, clay, mica, feldspar, silica and hydrous complex of alumina. A content of the above inorganic filler falls in a range of usually 10 to 180 parts by mass, preferably 20 to 120 parts by mass based on 100 parts by mass of the rubber component described above.

Further, carbon black can be added in an amount of 0 to 50 parts by mass, preferably 10 to 50 parts by mass based on 100 parts by mass of the rubber component described above for the purpose of enhancing a strength of the unvulcanized rubber.

A thickness of the rubbery elastic matter layer in the inner liner B layer according to the present invention is usually 200 $\mu$m or more. An upper limit thereof is suitably decided considering a reduction in a thickness of the gauge in using it as an inner liner.

EXAMPLES

Next, the present invention shall be explained in further details with reference to examples, but the present invention shall by no means be restricted by these examples. Various measuring methods were carried out based on the following methods.

<Production of inner liner A layers [layers A to C], film inner liner A layers [resin films D to E] and metal-deposited film inner liner A layers [metal-deposited film F]>

Layers A to C were produced based on blend compositions described in Table 1 by means of a kneading equipment according to a conventional method.

Further, a modified ethylene-vinyl alcohol copolymer comprising a resin film D was produced based on descriptions of Japanese Patent Application Laid-Open No. 176048/2004; DVA comprising a resin film E was produced based on descriptions of Japanese Patent Application Laid-Open No. 199713/1999; and an Al-deposited film comprising a metal-deposited film F was produced based on descriptions of WO 98/33668. The respective representative examples are shown.

Table 1

| Blend composition | A | B | C | D | E | F | Film 1 | Film 2 | Film 3 |
|---|---|---|---|---|---|---|---|---|---|
| | Control | CaCO$_3$ | Clay | Modified EVOH | DVA | Al-deposited | Resin composition | Resin composition | Resin composition |
| Brominated butyl rubber | 100 | 100 | 100 | - | - | - | - | - | - |
| Carbon black (GPF) | 60 | 40 | 40 | - | - | - | - | - | - |
| Calcium carbonate*1 | - | 30 | - | - | - | - | - | - | - |
| Kaolin clay*2 | - | - | 20 | - | - | - | - | - | - |
| Oil | 15 | 7 | 7 | - | - | - | - | - | - |
| Stearic acid | 2.0 | 2.0 | 2.0 | - | - | - | - | - | - |
| Zinc oxide | 2.0 | 2.0 | 2.0 | - | - | - | - | - | - |
| Vulcanization accelerator DM | 1.0 | 1.0 | 1.0 | - | - | - | - | - | - |
| Sulfur | 1.0 | 1.0 | 1.0 | - | - | - | - | - | - |
| Modified EVOH | - | - | - | (Remark 1) | - | - | - | - | - |
| DVA | - | - | - | - | (Remark 2) | - | - | - | - |
| Metal-deposited film | - | - | - | - | - | (Remark 3) | - | - | - |
| Resin composition | - | - | - | - | - | - | (Remark 4) | | |
| P @ 20°C | 2.40 | 1.20 | 1.20 | 0.001 | 0.19 | Impossible to measure | 0.0031 | 0.0031 | 0.0052 |
| P @ 20°C INDEX (the lower the better) | 100 | 50 | 50 | 0.042 | 7.9 | Impossible to measure | 0.129 | 0.129 | 0.217 |

*1: Calcium carbonate, trade name: Silver-W, average particle diameter: about 2 $\mu$m, flattening rate: about 3, manufactured by Shiraishi Kogyo Kaisha, Ltd.

*2: Kaolin clay, trade name: POLYFILE DL, average particle diameter: about 10 $\mu$m, flattening rate: about 15 %, manufactured by M. HUBER, B.W.K.

Remark 1: a resin film D obtained in Production Examples 1 and 2 was used.

Remark 2: a resin film E obtained in Production Example 3 was used.

Remark 3: a metal-deposited film F obtained in Production Example 4 was used.

Remark 4: resin composition films 1 to 3 obtained in Production Example 5 were used.

Production Example 1 resin film D

Synthetic Example 1 production of modified ethylene-vinyl alcohol copolymer-1

A pressure reaction vessel was charged with 2 parts by mass of an ethylene-vinyl alcohol copolymer (MFR: 5.5 g/10 minutes at 190°C under a load of 21.18N) having an ethylene content of 44 mole % and a saponification degree of 99.9 mole % and 8 parts by mass of N-methyl-2-pyrrolidone, and the mixture was heated and stirred at 120°C for 2 hours to thereby completely dissolve the ethylene-vinyl alcohol copolymer. Epoxypropane 0.4 part by mass as the epoxy compound was added thereto, and then the solution was heated at 160°C for 4 hours. After finishing heating, deposition was carried out in 100 parts by mass of distilled water, and N-methyl-2-pyrrolidone and unreacted epoxypropane were washed away with a large amount of distilled water to obtain a modified ethylene-vinyl alcohol copolymer (modified EVOH). Further, the modified ethylene-vinyl alcohol copolymer thus obtained was crushed into particles having a particle diameter of about 2 $\mu$m by means of a crusher, and then the particles were washed again with a large amount of distilled water. The particles after washed were dried in vacuum at room temperature for 8 hours, and then they were molten at 200°C by means of a dual shaft extruding machine and pelletized. A Young's modulus of the modified ethylene-vinyl alcohol copolymer obtained was 1300 MPa at 23°C.

(1) Measurement of Young's modulus at 23°C

A single layer film having a thickness of 20 $\mu$m was prepared on the following extruding conditions by means of a dual shaft extruding machine manufactured by Toyo Seiki Seisakusho, Ltd. Next, the above film was used to prepare a strip-shaped test piece having a width of 15 mm, and the test piece was left standing in a constant temperature room for one week on the conditions of 23°C and 50 % RH. Then, a stress-strain characteristics at 23°C and 50 % RH was measured on the conditions of a chuck distance of 50 mm and a tensile rate of 50 mm/minute by means of an autograph (AG-A500 type) manufactured by Shimadzu Corporation to determine a Young's modulus from an initial gradient of the stress-strain curve.
Screw: full flight
Cylinder, die temperature setting: C1/C2/C3/die = 200/200/200 (°C)

(2) Measurement of an ethylene content and a saponification degree of the ethylene-vinyl alcohol copolymer

The values were calculated from a spectrum obtained by $^1$H-NMR measurement (by means of JNM-GX-500 manufactured by Hitachi Electronics Ltd.) using deuterated dimethylsulfoxide as a solvent.

(3) Measurement of a melt flow rate of the ethylene-vinyl alcohol copolymer

In measurement of the melt flow rate (MFR) described above, a cylinder having an inner diameter of 9.55 mm and a length of 162 mm in a melt indexer L244 (manufactured by Takara Kogyo Co., Ltd.) was charged with the sample, and the sample was molten at 190°C; then, a plunger having a weight of 2160 g and a diameter of 9.48 mm was used to exert a load thereon, and the melt flow rate was determined from an amount (g/10 minutes) extruded per unit time from an orifice having a diameter of 2.1 mm which was provided in the center of the cylinder.
When a melting point of the ethylene-vinyl alcohol copolymer stays in a vicinity of 190°C or exceeds 190°C, MRF was measured at plural temperatures of the melting point or higher under a load of 2160 g to plot an inverse number of the absolute temperature to an axis of ordinate and a logarithm of MFR to an axis of abscissa in a single logarithmic graph, and a value calculated by extrapolating it to 190°C was set to the melt flow rate (MFR).

Production Example 2 preparation of three layer film

Modified EVOH obtained in Production Example 1 and thermoplastic polyurethane (Kuramiron 3190, manufactured by Kuraray Co., Ltd.) as an elastomer were used to prepare a three layer film (thermoplastic polyurethane layer/modified EVOH layer/thermoplastic polyurethane layer) on the following coextrusion molding conditions by means of a two kind - three layer coextruding equipment. The thicknesses of the respective layers were 20 $\mu$m in both of the modified EVOH layer and the thermoplastic polyurethane layer.
The coextrusion molding conditions are shown below.

•    Layer constitution:

thermoplastic polyurethane/modified EVOH /thermoplastic polyurethane (thickness: 20/20/20, unit: $\mu$m)

- Extruding temperatures of the respective resins:

  C1/C2/C3/die = 170/170/220/220°C

- Specifications of extruding equipments for the respective resins:

  Thermoplastic polyurethane:

  25 mm φ extruding equipment P25-18AC (manufactured by Osaka Seiki Work Co., Ltd.)

  Modified EVOH:

  20 mm φ extruding equipment lab equipment ME type CO-EXT (manufactured by Toyo Seiki Seisaku-sho, Ltd.)

- T die specification:

  for 500 mm width two kind - three layer (manufactured by Research Laboratory of Plastics Technology Co., Ltd.)

- Temperature of cooling roll: 50°C
- Accepting speed: 4 m/minute

Resin film E

Production Example 3 production of thermoplastic elastomer

A Banbury mixer was charged with 60 parts by mass of a rubber component: Br-IPMS (EXXPRO 89-4, manufactured by Exxon Chemical Co., Ltd.), and a vulcanizing agent: 0.3 part by mass of zinc oxide, 1.2 part by mass of zinc stearate and 0.6 part by mass of stearic acid. The mixture was kneaded for 2 minutes and discharged at 120°C to prepare an elastomer component containing the vulcanizing agent, and it was pelletized by means of a pelletizer for rubber. Then, the above elastomer component and a resin component (8 parts by mass of N11 (Nylon 11, Rilsan BMN O, manufactured by Atochem Corporation) and 32 parts by mass of N6/661 (Nylon 6/66 copolymer, Amilan CM6001, manufactured by Toray Industries, Inc.)) were dry-blended, and the blended matter was charged into a dual shaft kneading equipment and dynamically vulcanized to prepare a thermoplastic elastomer composition. In the above case, the kneading conditions were a temperature of 230°C and a shearing speed of 1000 s$^{-1}$. The thermoplastic elastomer composition prepared by dual shaft kneading was cooled with water and then pelletized, and next the pellets were allowed to pass through a T die in a single shaft kneading equipment to prepare a film having a thickness of 100 μm.

Metal-deposited film F

Production Example 4 production of Al-deposited film

Used was "CLARYL" comprising a PET (polyethylene terephthalate) polyester layer having a thickness of 12 μm coated only on one surface with aluminum of about 30 nm and a permeable supporting material comprising as a base material, natural rubber having a thickness of 0.6 mm on which a CLARYL 34.1 film commercially available from RHONE-POULENC Company was adhered. The above film comprises a natural rubber layer and a polyester (PET) layer as a support.

Synthetic Example 2 synthesis of modified ethylene-vinyl alcohol copolymer-2

A modified ethylene-vinyl alcohol copolymer was synthesized in the same manners in Synthetic Example 1, except that an ethylene-vinyl alcohol copolymer (MFR: 7.0 g/10 minutes at 190°C under a load of 21.18N) having an ethylene content of 32 mole % and a saponification degree of 99.9 mole % was used in place of the ethylene-vinyl alcohol copolymer (MFR: 5.5 g/10 minutes at 190°C under a load of 21.18N) having an ethylene content of 44 mole % and a saponification degree of 99.9 mole %, and it was pelletized. A Young's modulus of the modified ethylene-vinyl alcohol copolymer thus obtained was 1700 MPa.

Synthetic Example 3 synthesis of soft resin-1

A maleic anhydride-modified hydrogenated styrene-ethylene-styrene block copolymer was synthesized by a publicly known method and pelletized. The maleic anhydride-modified hydrogenated styrene-ethylene-styrene block copolymer thus obtained had a Young' modulus of 3 MPa at 23°C, a styrene content of 20 % and a maleic anhydride amount of 0.3 meq/g.

The Young' modulus at 23°C was measured by the same method as in the modified ethylene-vinyl alcohol copolymer described above.

Synthetic Example 4 synthesis of soft resin-2

Maleic anhydride-modified ultralow density polyethylene was synthesized by a publicly known method and pelletized. The maleic anhydride-modified ultralow density polyethylene thus obtained had a Young' modulus of 40 MPa at 23°C and a maleic anhydride amount of 0.04 meq/g.

<Resin composition film>

Production Example 5 preparation of resin composition films 1 to 3

The modified ethylene-vinyl alcohol copolymer-2 obtained in Synthetic Example 2 and the soft resins obtained in Synthetic Examples 3 and 4 were kneaded by means of a dual shaft extruding equipment to obtain resin compositions having blend formulations shown in Table 2. In this connection, an average particle diameter of the soft resin in the resin composition was measured by freezing the sample of the resin composition obtained, then cutting the above sample into a section by means of a microtome and observing the section under a transmission electron microscope. A Young' modulus of the resin composition at -20°C was measured in the same manner as in the measuring method of the Young' modulus described above, except that the set temperature was changed to -20°C. The measurement results are shown in Table 2.

Next, the resin composition obtained above and the thermoplastic polyurethane (TPU) (Kuramiron 3190, manufactured by Kuraray Co., Ltd.) were used to prepare a three layer film (thermoplastic polyurethane layer/resin composition layer/thermoplastic polyurethane layer) or (thermoplastic polyurethane layer/modified EVOH layer/thermoplastic polyurethane layer) on the following coextrusion molding conditions by means of a two kind - three layer coextruding equipment. The thicknesses of the respective layers used for the respective films are shown in Table 2.

The film 4 was prepared by using only the modified ethylene-vinyl alcohol copolymer. The coextrusion molding conditions are shown below.

- Layer constitution:

  thermoplastic polyurethane/modified EVOH/thermoplastic polyurethane or thermoplastic polyurethane /resin composition/thermoplastic polyurethane

- Extruding temperatures of the respective resins:

  C1/C2/C3/die = 170/170/220/220°C

- Specifications of extruding equipments for the respective resins:

  Thermoplastic polyurethane:

  25 mm φ extruding equipment P25-18AC (manufactured by Osaka Seiki Work Co., Ltd.)

  Modified EVOH:

  20 mm φ extruding equipment lab equipment ME type CO-EXT (manufactured by Toyo Seiki Seisaku-sho, Ltd.)

- T die specification:

  for 500 mm width two kind, three layer (manufactured by Research Laboratory of Plastics Technology Co., Ltd.)

- Temperature of cooling roll: 50°C
- Accepting speed: 4 m/minute

(4) Evaluation of bending resistance

Fifty sheets of films cut to 21 cm X 30 cm were prepared, and the respective films were subjected to humidity conditioning at 0°C for 7 days. Then, the films were bent at a bending frequency of 50, 75, 100, 125, 150, 175, 200, 225, 250, 300, 400, 500, 600, 700, 800, 1000 and 1500 times according to ASTM F 392-74 by means of a gerboflex tester manufactured by RKC Instrument Inc., and then the number of pinholes was measured. Measurement was carried out 5 times at the respective bending frequencies, and an average value thereof was set to the pinhole number. The bending frequency was allotted to an axis of ordinate, and the pinhole number (N) was allotted to an axis of abscissa, wherein the measurement results described above were plotted to determine the bending frequency (Np1) observed when the pinhole number was 1 by extrapolation, and the effective figure was set to the second digit. The films in which pinholes were not observed in bending of 1500 times were further increased in a bending frequency by every 500 times, and a bending frequency at which pinholes were observed was set to (Np1). The evaluation results are shown in Table 2.

Table 2

| | Composition | Blend amount (mass %) | Average particle diameter (μm) | Young's modulus at -20°C (MPa) | Oxygen permeation amount (cm$^3$·cm/cm$^2$·sec·cm Hg) | | Thickness of respective layers (μm) | Oxygen permeation amount (cm$^3$·cm/cm$^2$·sec·cm Hg) | Bending resistance <Np1> Bending frequency |
|---|---|---|---|---|---|---|---|---|---|
| | | | | | Resin composition layer | TPU layer | | Three layer film | |
| Film 1 | Synthetic Example 2 | 80 | | 1160 | 3.1×10$^{-13}$ | 4.6×10$^{-11}$ | 20/20/20 | 3.1×10$^{-13}$ | 400 |
| | Synthetic Example 3 | 20 | 0.7 | | | | | | |
| Film 2 | Synthetic Example 2 | 80 | - | 1170 | 3.1×10$^{-13}$ | 4.6×10$^{-11}$ | 20/20/20 | 3.1×10$^{-13}$ | 400 |
| | Synthetic Example 4 | 20 | 1.0 | | | | | | |
| Film 3 | Synthetic Example 2 | 80 | - | 1160 | 8.8×10$^{-13}$ | 4.6×10$^{-11}$ | 40/12/40 | 5.1×10$^{-13}$ | 700 |
| | Synthetic Example 3 | 20 | 0.7 | | | | | | |
| Film 4 | Synthetic Example 2 | 100 | - | 1450 | 2.7×10$^{-13}$ | 4.6×10$^{-11}$ | 20/20/20 | 2.7×10$^{-13}$ | 50 |

It can be found from the results shown in Table 2 that the resin compositions prepared by blending the modified ethylene-vinyl alcohol copolymers with the soft resins are improved in a bending resistance to a large extent.

Examples 1 to 27 and Comparative Examples 1 to 4

Heavy load radial tires for trucks and buses having a size of 11R22.5 were prepared on a trial basis by an ordinary method according to descriptions in Table 3 to Table 5. The number of the belt layers and the belt angles were described by every respective examples. In the belt, it is shown that a 1 belt, a 2 belt, a 3 belt and a 4 belt are provided in order from a carcass side.

A code R affixed in front of the numerical number of the belt gradient angle shows that the traverse grooves rise toward a right, and a code L shows that the traverse grooves rise toward a left.

(5) Measurement of oxygen permeation amount of inner liner

The rubber and the respective films each prepared were subjected to humidity conditioning at 20°C and.65 % RH for 5 days. Samples of the rubber and two sheets of the respective films which finished humidity conditioning were used to measure oxygen permeation amounts on the conditions of 20°C and 65 % RH according to a method described in JIS K7126 (equal pressure method) by means of a MOCON OX-TRAN 2/20 type manufactured by Modern Control Co., Ltd., and an average value thereof was calculated to determine the P value based on the following equation:

$$P = \text{average value (oxygen permeation amount)} \times 10^{10}$$

(6) Product gauge

A tire cut section was prepared, and then the product gauge was calculated as an average gauge of five portions on the periphery.

(7) Long run (LR) travelling distance after degradation

The tire was subjected to prior degradation by leaving standing at oxygen/air = 50 %/50 % and an inner pressure of 900 kPa for 2 months, and then it was charged with air 100 % at an inner pressure of 900 kPa and travelled on a drum at 80 km/hour to determine a distance at which failures were caused on the tire and turn it to an index. The larger the numerical value is, the more excellent the degradation resistance is.

(8) Travelling growth rate

The tire charged with air at an inner pressure of 800 kPa was subjected to QC drum 3 steps, and after finishing it, the tire growth proportion (radius growth ratio before and after the test) was determined.

Table 3

| | | | Comparative Example | | | Example | | | | | | | | | | |
|---|---|---|---|---|---|---|---|---|---|---|---|---|---|---|---|---|
| | | | 1 | 2 | 3 | 1 | 2 | 3 | 4 | 5 | 6 | 7 | 8 | 9 | 10 |
| Inner liner-A performance | Inner liner-A kind | P | A | A | A | C | C | C | D | D | D | Film 1 | Film 1 | Film 2 | Film 3 |
| | P@20°C | | 2.4 | 2.4 | 2.4 | 1.2 | 1.2 | 1.2 | 0.001 | 0.001 | 0.001 | 0.0031 | 0.0031 | 0.0031 | 0.0052 |
| | Product gauge (mm) | G | 1.6 | 2.2 | 1.6 | 1.6 | 1.4 | 1.4 | 0.10 | 0.10 | 0.20 | 0.06 | 0.06 | 0.06 | 0.09 |
| | Inner liner-A performance | P/G | 1.5 | 1.10 | 1.5 | 0.75 | 0.86 | 0.86 | 0.01 | 0.01 | 0.005 | 0.05 | 0.05 | 0.05 | 0.06 |
| | Belt number | | 4 | 4 | 4 | 4 | 4 | 4 | 4 | 4 | 4 | 4 | 4 | 4 | 4 |
| | Belt angle | 1B | R52 | R52 | R52 | R52 | R52 | R52 | R52 | R52 | R52 | R52 | R52 | R52 | R52 |
| | | 2B | R18 | R18 | R18 | R18 | R18 | R18 | R18 | R18 | R18 | R18 | R18 | R18 | R18 |
| | | 3B | L18 | L18 | L18 | L18 | L18 | L18 | L18 | L18 | L18 | L18 | L18 | L18 | L18 |
| | | 4B | L18 | L18 | L18 | L18 | L18 | L18 | L18 | L18 | L18 | L18 | L18 | L18 | L18 |
| Crossing layer | Inner liner-B layer gauge | | 1.6 | 1.6 | 0.8 | 0.8 | 1.0 | 0.8 | 1.0 | 0.8 | 0.8 | 1.6 | 0.8 | 0.8 | 0.8 |
| | Ply insert | | 0 | 0 | 0 | 0 | 0 | 0.2 | 0 | 0 | 0 | 0 | 0 | 0 | 0 |
| | Distance up to crossing layer (D) | (mm) | 6.5 | 6.5 | 5.7 | 5.7 | 5.9 | 5.9 | 5.7 | 5.7 | 5.7 | 6.5 | 5.7 | 5.7 | 5.7 |

(continued)

| | | | Comparative Example | | | Example | | | | | | | | | | |
|---|---|---|---|---|---|---|---|---|---|---|---|---|---|---|---|---|
| | | | 1 | 2 | 3 | 1 | 2 | 3 | 4 | 5 | 6 | 7 | 8 | 9 | 10 |
| Tire performance | LR distance after degradation (index) | the higher the better | 100 | 105 | 90 | 103 | 104 | 104 | 110 | 108 | 120 | 134 | 130 | 130 | 120 |
| | Travelling growth rate (index) | the lower the better | 100 | 90 | 105 | 93 | 93 | 95 | 85 | 90 | 85 | 85 | 85 | 85 | 87 |
| | Tire weight (index) | the lower the better | 100 | 102 | 97 | 97 | 98 | 98 | 95 | 93 | 93 | 95 | 94 | 94 | 94 |
| | RR (index) | the lower the better | 100 | 102 | 99 | 98 | 99 | 99 | 98 | 97 | 97 | 98 | 97 | 97 | 97 |

Table 4

| | | | Comparative Example | | Example | | | | | | | | | | | |
|---|---|---|---|---|---|---|---|---|---|---|---|---|---|---|---|---|
| | | | 1 | 4 | 11 | 12 | 13 | 14 | 15 | 16 | 17 | 18 | 19 | 20 | 21 |
| Inner liner-A performance | Inner liner-A kind | | A | A | B | B | B | C | C | D | D | Film 1 | Film 1 | Film 2 | Film 3 |
| | P@20°C | P | 2.4 | 2.4 | 1.2 | 1.2 | 1.2 | 1.2 | 1.2 | 0.001 | 0.001 | 0.0031 | 0.0031 | 0.0031 | 0.0052 |
| | Product gauge (mm) | G | 1.6 | 1.6 | 1.6 | 2.0 | 1.6 | 2.4 | 2.4 | 0.02 | 0.02 | 0.06 | 0.06 | 0.06 | 0.09 |
| | Inner liner-A performance | P/G | 1.5 | 1.5 | 0.75 | 0.6 | 0.75 | 0.50 | 0.50 | 0.05 | 0.05 | 0.05 | 0.05 | 0.05 | 0.06 |
| | Belt number | | 4 | 3 | 3 | 3 | 3 | 3 | 3 | 3 | 3 | 3 | 3 | 3 | 3 |
| | Belt angle | 1B | R52 | R18 | R18 | R18 | R18 | R18 | R18 | R18 | R18 | R19 | R18 | R18 | R19 |
| | | 2B | R18 | L18 | L18 | L18 | L18 | L18 | L18 | L18 | L18 | L18 | L18 | L18 | L18 … |
| | | 3B | L18 | R52 | R52 | R52 | R52 | R52 | R52 | R52 | R52 | R52 | R52 | R52 | R52 |
| | | 4B | L18 | - | - | - | - | - | - | - | - | - | - | - | - |
| Crossing layer | Inner liner-B layer gauge | | 1.6 | 1.6 | 1.6 | 1.2 | 1.6 | 1.6 | 0.8 | 1.6 | 0.8 | 0.8 | 0.8 | 0.8 | 0.8 |
| | Ply insert | | 0 | 0 | 0 | 0 | 0.2 | 0 | 0 | 0 | 0 | 0 | 0 | 0 | 0 |
| | Distance up to Crossing layer (D) | (mm) | 6.5 | 4.9 | 4.9 | 4.5 | 5.1 | 4.9 | 4.1 | 4.9 | 4.1 | 4.1 | 4.1 | 4.1 | 4.1 |

| | | | Comparative Example | | Example | | | | | | | | | | | | |
|---|---|---|---|---|---|---|---|---|---|---|---|---|---|---|---|---|---|
| | | | 1 | 4 | 11 | 12 | 13 | 14 | 15 | 16 | 17 | 18 | 19 | 20 | 21 |
| Tire performance | LR distance after degradation (index) | the higher the better | 100 | 80 | 102 | 103 | 103 | 105 | 100 | 125 | 120 | 130 | 126 | 126 | 1117 |
| | Travelling growth rate (index) | the lower the better | 100 | 90 | 88 | 85 | 86 | 85 | 90 | 75 | 80 | 80 | 80 | 80 | 82 |
| | Tire weight (index) | the lower the better | 100 | 98 | 98 | 98 | 99 | 98 | 96 | 93 | 92 | 93 | 92 | 92 | 92 |
| | RR (index) | the lower the better | 100 | 98 | 99 | 99 | 99 | 99 | 97 | 97 | 94 | 95 | 94 | 94 | 94 |

Table 5

| | | | Comparative Example | | Example | | | | | |
|---|---|---|---|---|---|---|---|---|---|---|
| | | | 1 | 4 | 22 | 23 | 24 | 25 | 26 | 27 |
| Inner liner-A layer performance | Inner liner kind | | A | A | D | D | E | E | F | F |
| | P@20°C | P | 2.4 | 2.4 | 0.001 | 0.001 | 0.19 | 0.19 | Not measurable | Not measurable |
| | Product gauge (mm) | G | 1.6 | 1.6 | 0.02 | 0.02 | 0.2 | 0.2 | $3.0 \times 10^{-5}$ | $3.0 \times 10^{-5}$ |
| | Inner liner performance | P/G | 1.50 | 1.5 | 0.05 | 0.05 | 0.95 | 0.95 | Not measurable | Not measurable |
| Crossing layer | Belt structure (number) | | 4 | 3 | 4 | 3 | 4 | 3 | 4 | 3 |
| | Belt angle | 1B | R52 | R18 | R52 | R18 | R52 | R18 | R52 | R18 |
| | | 2B | R18 | L18 | R18 | L18 | R18 | L18 | R18 | L18 |
| | | 3B | L18 | L52 | L18 | L52 | L18 | L52 | L18 | L52 |
| | | 4B | L18 | - | L18 | - | L18 | - | L18 | - |
| | Inner liner B layer gauge | (mm) | 1.6 | 1.6 | 0.8 | 0.8 | 0.8 | 1.6 | 0.8 | 0.8 |
| | Ply insert | (mm) | 0 | 0 | 0 | 0 | 0 | 0.2 | 0 | 0 |
| | Distance up to crossing layer(D) | (mm) | 6.5 | 4.9 | 5.7 | 4.1 | 5.7 | 5.1 | 5.7 | 4.1 |
| Tire performance | LR distance after degradation (index) | the higher the better | 100 | 80 | 130 | 120 | 105 | 103 | 150 | 140 |
| | Travelling growth rate (index) | the lower the better | 100 | 90 | 85 | 80 | 90 | 86 | 75 | 70 |
| | Tire weight (index) | the lower the better | 100 | 98 | 93 | 92 | 94 | 99 | 95 | 93 |
| | RR (index) | the lower the better | 100 | 98 | 97 | 94 | 97 | 99 | 97 | 94 |

EP 2 147 803 B1

The followings can be found from the results shown in Table 3 to Table 5.

Even if the belt structure is changed from a four layer belt to a three layer belt, so that a distance D thereof to the crossing layer is shortened, a heavy load radial tire which is excellent in a tire durability, a reduction in a weight and a low fuel consumption can be obtained by optimizing the value of P/G to keep a balance between both. A radial tire for a heavy load which is excellent in a tire durability, a reduction in a weight and a low fuel consumption can be provided by applying a resin film containing a modified ethylene-vinyl alcohol copolymers, an Al-deposited layer and the like to the inner liner A layer.

INDUSTRIAL APPLICABILITY

The present invention can provide a radial tire for a heavy load in which a tire durability is consistent with a reduction in a weight and can improve as well a low fuel consumption of the tire.

**Claims**

1. A radial tire for a heavy load comprising a bead core, a carcass ply layer (3), an inner liner A layer (1), a belt (5) and a tread, wherein the following relational equation I:

$$P/G \leqq 1.00 \qquad (I)$$

wherein P/G represents an oxygen permeation resistant performance of the inner liner A layer (1); P represents a value shown by an oxygen permeation amount in $cm^3 \cdot cm/cm^2 \cdot sec \cdot cm$ Hg $\times 10^{10}$ of the inner liner A layer at 20°C and 65 % RH; and G represents a product gauge in mm of the inner liner A layer, and a relational equation II:

$$D \leqq 6.0 \qquad (II)$$

wherein D represents a distance in mm from an interface of the inner liner A layer (1) at an outside in a tire diameter direction to an interface of covered rubber in a belt crossing layer, are satisfied at the same time; wherein :

the inner liner A layer (1) comprises a rubber composition containing a brominated butyl rubber and at least one selected from calcium carbonate and clay.

2. The radial tire for a heavy load according to claim 1,
wherein an inner liner B layer (2) is provided in an inside of the carcass ply layer (3), and the inner liner A layer (1) is provided in an innermost layer thereof.

3. The radial tire for a heavy load according to claim 1 or 2,
wherein a product gauge of the inner liner A layer (1) is $1 \times 10^{-5}$ mm to 4 mm.

4. The radial tire for a heavy load according to claim 1, wherein the following relational equation III:

$$P/G \leqq 0.50 \qquad (III)$$

and relational equation IV:

$$D \leqq 5.2 \qquad (IV)$$

are satisfied at the same time.

5. The radial tire for a heavy load according to any of claims 1 to 4, wherein a P value of the inner liner A layer (1) at 20°C and 65 % RH is 0.03 or less.

## Patentansprüche

1. Radialreifen für schwere Last, der einen Wulstkern, eine Karkassenlagenschicht (3), eine Innenseelenschicht A (1), einen Gürtel (5) und eine Lauffläche umfasst, wobei die folgende Beziehungsgleichung I:

$$P/G \leq 1,00, \qquad (I)$$

wobei P/G eine sauerstoffpermeationsbeständige Leistung der Innenseelenschicht A (1) darstellt, P einen durch eine Sauerstoffpermeationsmenge in $cm^3 \cdot cm/cm^2 \cdot s \cdot cm$ Hg $\times 10^{10}$ der Innenseelenschicht A bei 20°C und 65 % RH gezeigten Wert darstellt und G eine Erzeugnisstärke in mm der Innenseelenschicht A darstellt, und eine Beziehungsgleichung II:

$$D \leq 6,0, \qquad (II)$$

wobei D eine Entfernung in mm von einer Grenzfläche der Innenseelenschicht A (1) an einer Außenseite in der Reifendurchmesserrichtung bis zu einer Grenzfläche eines überzogenen Gummis in einer Gürtelkreuzungsschicht darstellt, zur gleichen Zeit erfüllt sind, wobei
die Innenseelenschicht A (1) eine Gummizusammensetzung umfasst, die einen bromierten Butylkautschuk und wenigstens eines, das von Kalziumkarbonat und Ton ausgewählt ist, enthält.

2. Radialreifen für schwere Last nach Anspruch 1, wobei eine Innenseelenschicht B (2) in einer Innenseite der Karkassenlagenschicht (3) bereitgestellt wird und die Innenseelenschicht A (1) in einer innersten Schicht derselben bereitgestellt wird.

3. Radialreifen für schwere Last nach Anspruch 1 oder 2, wobei eine Erzeugnisstärke der Innenseelenschicht A (1) 1 $\times 10^{-5}$ mm bis 4 mm beträgt.

4. Radialreifen für schwere Last nach Anspruch 1, wobei die folgende Beziehungsgleichung III:

$$P/G \leq 0,50 \qquad (III)$$

und die Beziehungsgleichung IV:

$$D \leq 5,2 \qquad (IV)$$

zur gleichen Zeit erfüllt sind.

5. Radialreifen für schwere Last nach einem der Ansprüche 1 bis 4, wobei ein P-Wert der Innenseelenschicht A (1) bei 20°C und 65 % RH 0,03 oder weniger beträgt.

## Revendications

1. Pneu radial pour une charge lourde, comprenant une tringle, une couche formant nappe de carcasse (3), une couche A de revêtement interne (1), une ceinture (5) et une bande de roulement, dans lequel l'équation relationnelle I suivante :

$$P/G \leq 1,00 \qquad (I)$$

où P/G représente une performance de résistance à la perméation d'oxygène de la couche A de revêtement interne (1) ; P représente une valeur présentée par une quantité de perméation d'oxygène en $cm^3 \cdot cm/cm^2 \cdot sec \cdot cm\ Hg \times 10^{10}$ de la couche A de revêtement interne à 20°C et 65% d'humidité relative HR ; et G représente une épaisseur de produit en mm de la couche A de revêtement interne,
et une équation relationnelle II :

$$D \leq 6,0 \qquad (II)$$

où D représente une distance en mm entre une interface de la couche A de revêtement interne (1) au niveau d'un extérieur dans une direction de diamètre de pneu et une interface de caoutchouc recouvert dans une couche de croisement de ceinture,
sont satisfaites en même temps ; dans lequel
la couche A de revêtement interne (1) comprend une composition de caoutchouc contenant un butylcaoutchouc bromé et au moins une matière sélectionnée parmi du carbonate de calcium et de l'argile.

2. Pneu radial pour une charge lourde selon la revendication 1, dans lequel une couche B de revêtement interne (2) est fournie dans un intérieur de la couche formant nappe de carcasse (3), et la couche A de revêtement interne (1) est fournie dans une couche la plus interne dudit pneu.

3. Pneu radial pour une charge lourde selon la revendication 1 ou 2, dans lequel une épaisseur de produit de la couche A de revêtement interne (1) est comprise entre $1 \times 10^{-5}$ mm et 4 mm.

4. Pneu radial pour une charge lourde selon la revendication 1, dans lequel l'équation relationnelle suivante III :

$$P/G \leq 0,50 \qquad (III)$$

et l'équation relationnelle IV :

$$D \leq 5,2 \qquad (IV)$$

sont satisfaites en même temps.

5. Pneu radial pour une charge lourde selon l'une quelconque des revendications 1 à 4, dans lequel une valeur P de la couche A de revêtement interne (1) à 20°C et 65 % d'humidité relative HR est inférieure ou égale à 0,03.

**EP 2 147 803 B1**

**REFERENCES CITED IN THE DESCRIPTION**

**Patent documents cited in the description**

- JP 2004176048 A
- JP 11199713 A
- WO 2004081099 A
- WO 9833688 A
- EP 0732224 A1
- WO 9833668 A